# EUROPÄISCHE PATENTSCHRIFT

(11) **EP 0 790 271 B1**
(45) Veröffentlichungstag und Bekanntmachung des Hinweises auf die Patenterteilung: **29.09.1999**
(21) Anmeldenummer: 97102222.3
(22) Anmeldetag: 12.02.1997
(51) Int. Cl.: C08G 69/28

(54) **Verfahren zur Herstellung von teilaromatischen Copolyamiden aus aromatischen Dicarbonsäureestern**
Process for the preparation of partly aromatic copolyamides from aromatic dicarboxylic acid esters
Procédé de préparation de copolyamides partiellement aromatiques à base d'estersd'acide dicarboxylique

(30) Priorität: 14.02.1996 DE 19605474
(43) Veröffentlichungstag der Anmeldung: 20.08.1997
(73) Patentinhaber: Ems-Polyloy GmbH, 64823 Gross-Umstadt (DE)
(72) Erfinder: Wagner, Harald, Dr.rer.nat., Dipl.-Chem., 01705 Freital (DE); Ensinger, Joachim, Dipl.-Ing. TH, 7430 Thusis (CH); Krumpschmid, Erich, 64823 Gross-Umstadt (DE)
(74) Vertreter: Kurig, Thomas, Dr.

(56) Entgegenhaltungen:
- DE-A- 2 216 116
- GB-A- 1 049 987
- US-A- 4 604 449

## Beschreibung

Die Erfindung betrifft den in den Patentansprüchen angegebenen Gegenstand.

Die Erfindung betrifft insbesondere ein neues Verfahren zur Herstellung von teilaromatischen Copolyamiden aus polymeren Estern aromatischer Dicarbonsäuren, vorzugsweise aus Polyester-Recyclaten oder aus polymerisiertem, z.B. bei der PET-Produktion als "Abfall" anfallendem Polyester, durch Amidierung der Estergruppen mit Diaminen in Gegenwart von aliphatischen Polyamiden oder deren Oligomeren oder Monomeren, entsprechende Nachbehandlung und Weiterverarbeitung auf Basis der vorgenannten teilaromatischen Copolyamide, die durch dieses neue Verfahren herstellbaren Copolyamid-Formmassen sowie die Verwendung dieser Copolyamid-Formmassen.

Als neuer Rohstoff für Copolyamide können somit erfindungsgemäß erstmals auch Polyesterabfälle, die auch aus der Polyesterproduktion stammen können, bzw. daraus hergestelltes Regranulat verwendet werden.
Diese Materialien können allerdings noch oligomere oder monomere Ester enthalten, die jedoch das Verfahren nicht beeinträchtigen.

Teilaromatische Polyamide mit Terephthalamid- bzw. Isophthalamid-Einheiten sind im Prinzip schon seit mehreren Jahrzehnten bekannt, jedoch sind diese aufgrund ihrer anforderungsreichen Herstellungsverfahren erst seit den siebziger Jahren kommerziell verfügbar geworden. Verfahren und Apparate für die Herstellung von hochschmelzenden, teilkristallinen Polyterephthalamiden stehen sogar erst seit Mitte der achtziger Jahre zur Verfügung (zum Beispiel der sogenannte "Aerosol-Prozess" von AMOCO, wie beschrieben in US-PS 4,831,108).

Weil die reinen Hochtemperaturpolyamide (Homo-Polymere) aufgrund ihres hohen Schmelzpunktes sehr schwierig zu handhaben sind, werden meist daraus abgeleitete Copolyamide mit reduziertem Schmelzpunkt (oder sogar amorphe, je nach Molverhältnis) hergestellt, wie zum Beispiel PA 6T/61, oder die (bezüglich Dicarbonsäureanteil) nur noch teilaromatischen PA 6T/66 oder PA 6T/6, die aber ebenfalls technisch interessante Anwendungsmöglichkeiten besitzen.

Theoretisch ist eine Vielzahl unterschiedlicher teilaromatischer Copolyamide aus aromatischen Dicarbonsäuren, Diaminen sowie Lactamen (bzw. ω-Aminosäuren) zugänglich. Das gemeinsame an allen bisher bekannten Herstellungsverfahren ist aber, dass als Rohstoff die oben erwähnten Komponenten als solche in reiner, monomerer Form eingesetzt werden, wobei Dicarbonsäure(n) und Diamin(e) zweckmässigerweise in einem dem Polykondensationsreaktor vorgeschalteten Lösungsgefäss zunächst in etwa äquimolaren Mengen zu wässerigen, gegebenenfalls lactamhaltigen "Nylon"-Salzlösungen umgesetzt werden.

Losgelöst vom obigen Ansatz und zunächst scheinbar ohne Zusammenhang mit dem angestrebten Endprodukt gibt es auf einem anderen Polymer-Einsatzgebiet ein bekanntes Problem: Bei der Getränkeabfüllung, insbesondere für kohlensäurehaltige Softdrinks, haben die gebrauchsfreundlichen Polyesterflaschen die Glasflaschen weitgehend verdrängt. Bei der grossen Zahl der Einwegflaschen, aber auch bei den ausgedienten Mehrwegflaschen, stellt sich das Problem des Recycling, weil der Haushalt-Abfallberg nicht noch zusätzlich durch Polyesterflaschen vergrössert werden darf, und andererseits Polyesterflaschen im Prinzip einen wertvollen Rohstoff darstellen. Für die Sammlung und Wiederverwertung von Polyesterflaschen wurden schon verschiedene Konzepte entwickelt und zum Teil eingeführt, wie zum Beispiel dargestellt ist im Vortrag von H.-W. Blumschein: "Chance or risk for PET-Packaging, -Recycling-, How to close the loop in Western Europe" (Davos Recycle '92, International Forum and Exposition, April 7-10, 1992). Neben der rein mechanischen Zerkleinerung, Reinigung und Wiederverwertung (Flakes oder Regranulat für Fasern etc.) werden in diesem Vortrag auch chemische Recyclingwege beschrieben wie zum Beispiel Methanolyse oder Glykolyse, die den vollständigen Abbau des Polymeren bis zu den Monomeren beinhalten. Weil die Monomeren wieder zur Herstellung von Polyester für Lebensmittelverpackungen verwendet werden dürfen, kann man auf diese Weise den Kreislauf schliessen, allerdings ist dies nicht der wirtschaftlichste Weg der stofflichen Wiederverwertung. Teuer daran ist vor allem die Reinigung der Recycling-Monomere. Ein Beispiel dafür ist das in EP 0 497 662 A1 beschriebene Verfahren zur Herstellung reiner Terephthalsäure aus PET-Abfällen. Dieses Verfahren umfaßt die Depolymerisation von PET-Schnitzeln mit reinem Natriumhydroxid, das Lösen des Natrium-Terephthalats in Wasser mit anschliessender Reinigung in einem speziellen Aktivkohle-Adsorptions/Regenerationsprozess, Ausfällen der Terephthalsäure mit Schwefelsäure sowie Abfiltrieren, Waschen und Trocknen der reinen Terephthalsäure. Neben dem hohen Aufwand weist das Verfahren zwei gravierende Nachteile auf: als Nebenprodukt fällt eine grosse Menge zu entsorgendes Natriumsulfat an, und die resultierende Terephthalsäure ist wegen der Ausfällung bei relativ niedriger Temperatur im Vergleich zu handelsüblicher Terephthalsäure sehr feinkörnig und deshalb schwierig zu handhaben.

Ein Depolymerisationsverfahren von PET-Abfällen mit neutraler Hydrolyse und gleichzeitiger Aktivkohle-Reinigung wird in DE 32 21 341 C2 beschrieben. Der Nachteil dieses Verfahrens besteht im notwendigen hohen Druck (Hochdruckbehälter) und den relativ langen Verweilzeiten.

Um den aufwendigen Umweg über die Zerlegung in Monomere zu umgehen, gab es Vorschläge, Polyester-Abfälle durch geeignete Verfahren direkt für die Wiederverwendung aufzubereiten. EP 0 483 665 A2 beschreibt ein Verfahren, bei welchem die PET-Abfälle geschmolzen, filtriert und im letzten Schritt entweder in Schmelze- oder Festphase auf ein höheres (bzw. ursprüngliches) Molekulargewichtsniveau nachkondensiert werden. Solch höherwertiges PET-Regranulat kann nach Extrusion zusammen mit Originalrohstoff in der Mittelschicht von Folien verwendet werden.

Gemäss Bericht in Plastics Focus Vol. 26, No. 19, September 26, 1994, ist es mit einem ähnlichen, verbesserten Verfahren ("super cleaning") anscheinend gelungen, eine Recycling-PET-Qualität zu erreichen, die im direkten Kontakt mit Lebensmitteln eingesetzt werden darf. Trotz dieses Durchbruchs muss man sich aber bewusst sein, dass man auf diesem Weg den Kreis nie vollständig, d.h. zu annähernd 100 Prozent wird schliessen können und man für die hohen Reinheitsanforderungen an Lebensmittel- und Getränkeverpackungen immer "jungfräuliches" Granulat wird beimischen müssen, weil in organischem Material wie PET bei den Schmelzetemperaturen immer Abbaureaktionen ablaufen, welche die Qualität verschlechtern. Für einen Teil des Recycling-Polyesters sollten deshalb neben dem Einsatz für andere Polyesteranwendungen noch weitere Verwendungsmöglichkeiten gesucht werden.

Ein erster Ansatz zur Herstellung anderer Produkte aus Polyesterabfall ist beschrieben in H.G. Zengel, M.J. Bergfeld: A new process for the production of p-phenylenediamine alternatively from polyester waste, terephthalic ester, or terephthalic acid; Ind. Eng. Chem., Prod. Res. Dev., Vol. 15, No. 3, 1976, Seite 186-189. Wie es der Titel schon sagt, kann aus PET-Abfall p-Phenylendiamin hergestellt werden, welches wiederum als Rohstoff zur Herstellung von z.B. Azofarben, Diisocyanaten oder aromatischen Polyamiden verwendet werden kann. Das in Suspension bzw. Lösung durchgeführte Verfahren besteht aus den drei Schritten PET-Abbau mit Ammoniak zum Terephthaldiamid, der Umsetzung mit Chlor zum Terephthaldichloramid sowie einer Hofmann-Umlagerung mit Natronlauge zum Diamin (mit anschliessender Reinigung). Dieses aufwendige Verfahren mit nicht ganz harmlosen Reagenzien liefert aber noch kein Endprodukt, sondern ein monomeres Zwischenprodukt.

Daher ist es Aufgabe der Erfindung, ein neues und zugleich einfaches Verfahren zur Herstellung von teilaromatischen Copolyamiden bereitzustellen, wobei insbesondere neue Rohstoffquellen, d.h. insbesondere Abfälle aus Polyethylenterephthalat oder darauf basierenden Polyestern eingesetzt werden können. Das Verfahren soll im Rühr-Reaktor und/oder im Reaktions-Extruder durchführbar sein.

Diese Aufgabe wird durch das Verfahren gemäß Anspruch 1 bzw. durch die Verwendung von dementsprechend hergestellten Polyamid-Formmassen auf Basis von teilaromatischen Copolyamiden gemäß Anspruch 17 gelöst.

In den Unteransprüchen sind vorteilhafte Ausführungsformen der Erfindung enthalten.

Mit dem erfindungsgemäßen Verfahren konnten überraschenderweise polymere, oligomere oder monomere Ester von aromatischen Dicarbonsäuren beliebigen Ursprungs, d.h. auch von Polyester-Abfällen (z.B. Flaschenschnitzel oder -regranulat) als Ausgangsprodukt bzw. als Rohstoff eingesetzt werden. Durch Abbau des eingesetzten Polyesters und unter nahezu vollständiger (nahezu 100 Prozent) Amidierung der Estergruppen und der nachfolgenden Entfernung der abgespaltenen Alkohole und Diole kann wieder teilaromatisches Copolyamid nachkondensiert werden, das dann mittels Compoundierung mit bekannten Zusatzstoffen zu anwendungsfertigen Polyamid-Formmassen weiterverarbeitet werden kann. Mit anderen Worten ist es somit erstmals möglich, aus (Abfall-)PET wiederum Produkte mit hervorragenden Eigenschaften herzustellen. Weiterhin wird mit dem erfindungsgemäßen Verfahren ein neuer, wesentlicher Lösungsbeitrag zu einem aktuellen Recyclingproblem, das Polyester generell betrifft, gemacht.

In diesem Zusammenhang wird auf die DE 42 21 969 A1 verwiesen, gemäß welcher ein Verfahren zur Herstellung von verträglichen Polymer-Blends aus Polyamid und Polyester beschrieben wird, bei dem ebenfalls Polyesterabfälle (zusammen mit Polyamidabfällen) eingesetzt werden können. Nach diesem Verfahren wird jedoch die aus den Rohstoffen erhaltene Schmelzemischung mit cyclischem Carbonsäureanhydrid sowie mit Diisocyanat und/oder Diurethan behandelt, wodurch sich an den Phasengrenzen Block-Copolyesteramide mit längeren Sequenzen bilden, was lediglich die Verträglichkeit der Blendbestandteile verbessert. Eine Umamidierung, d.h. eine chemische Umwandlung der Polyester-Blendkomponente, wie dies erfindungsgemäß stattfindet, erfolgt dabei jedoch nicht.

Daß im Prinzip Polyester mit Diaminen umgesetzt werden können, ist zwar an und für sich bekannt, jedoch war es nicht vorhersehbar, daß mit dem erfindungsgemäßen Verfahren Polyester vollständig mit Diaminen umgesetzt werden können und zwar in einem technisch durchführbaren Prozeß, der auch zu verwertbaren Produkten führt.

In der US 4,604,449 ist ein Verfahren beschrieben, mit welchem aus Neopentyl-Glykol-Polyestern und Diaminen durch eine Teilamidierung und Nachkondensation Polyester-amide hergestellt werden. Das Ausmaß der Amidierung liegt dabei jedoch nur im Bereich von 5 bis 50 mol-%, d.h. die Polyesterketten bleiben - je nach Amidierungsgrad - zu einem mehr oder weniger grossen Teil erhalten, so dass die Molmasse und ihre Verteilung im Ausgangsprodukt einen Einfluss auf das Endprodukt haben. Von der Verwendung von Polyethylenterephthalat für dieses Verfahren wird mit dem Hinweis auf die in diesem Fall extrem grosse Molekulargewichtsverbreiterung explizit abgeraten (Beispiel 1).

Umso überraschender ist es, dass es mit dem vorliegenden erfindungsgemässen Verfahren gelungen ist, ausgerechnet aus PET gute Produkte herzustellen und eine nahezu 100%ige Umamidierung zu erreichen.

Ein ähnliches Verfahren mit etwas anderen Rohstoffkomponenten ist in DD 271 823 A3 beschrieben. Bei diesem Verfahren werden Polyalkylen-arylendicarbonsäureester (zum Beispiel PET) mit bis zu 50 mol-% aromatischen Diaminen zu Polyesteramiden umgesetzt und nachkondensiert, wodurch hochmodulige, anisotrope Polymere entstehen. Wie bei dem Verfahren gemäß US 4,604,449 handelt es sich nur um eine Teilamidierung, und zudem ist das Verfahren auf aromatische Diamine beschränkt.

Sowohl in der DD 271 823 als auch in der US 4,604,449 wird vor einem zu hohen Amidierungsgrad gewarnt, weil sonst nicht oder nur schwer schmelzbare und uneinheitliche Produkte entstehen, wie in Beispiel 3 von DD 271 823 A3 erwähnt. Somit war also die Idee einer vollständigen Umamidierung der Esterbindungen nicht nahegelegt.

Das erfindungsgemässe Verfahren lässt sich strukturieren in die Haupt-Verfahrensschritte Ester-Amidierung (a), Alkohol-(bzw. Diol-) Entfernung (b) und Nachkondensation (c). Diesen drei Schritten vorgeschaltet ist das Aufschmelzen und Homogenisieren der Edukte, während sich an die Nachkondensation die Weiterverarbeitung des erfindungsgemäss entstandenen, teilaromatischen Copolyamids anschliesst. In Schritt (a) findet erfindungsgemäß die Esteramidierung unter intensivem Durchmischen und unter Inertgasatmosphäre bei Temperaturen von 220 bis 300°C statt. Erfindungsgemäß erfolgt die Nachkondensation bei Temperaturen über 200°C.

Erfindungsgemäß stellt man in Schritt (a) ein Verhältnis von Polyester-Grundmol-Einheit zu Moldiamin, in reiner Form oder als Gemisch von Diaminen, von 1:1 bis 1:1,2 ein.

Als wichtige Bedingung stellte sich heraus, dass bereits bei der Amidierung der Ester aliphatische Polyamide oder deren Oligomere oder Monomere anwesend sein müssen, um durch frühzeitige Bildung von Copolyamiden das im Stand der Technik angesprochene Problem der uneinheitlichen Produkte mit sehr hoch schmelzenden Anteilen zu vermeiden.

Ebenfalls meist schon zu Beginn werden dem Reaktionsgemisch im Hinblick auf die spätere Nachkondensation übliche Additive wie Kettenregler und gegebenenfalls Stabilisatoren (zum Beispiel Antioxidantien) zugesetzt.

Zur Amidierung der Ester können im Prinzip beliebige Diamine eingesetzt werden. Bevorzugt verwendet werden Diamine der Struktur H₂N-R¹-NH₂, wobei der Rest R¹ folgende Bedeutungen haben kann:
- zweiwertiger aromatischer Rest mit 6 bis 14 C-Atomen, oder
- zweiwertiger alicyclischer Rest mit 6 C-Atomen, oder
- zweiwertiger Rest der Formel CH₂-R²-CH₂ , wobei R²
   . einen zweiwertigen aliphatischen Rest mit 2 bis 20 C-Atomen, oder
   . einen zweiwertigen alicyclischen Rest mit 6 bis 20 C-Atomen, oder
   . einen zweiwertigen aromatischen Rest mit 6 bis 16 C-Atomen darstellt.

Besonders bevorzugt sind folgende Diamine:
- Hexamethylendiamin,
- m-Xylylendiamin,
- 1,4-Bis(aminomethyl)-cyclohexan oder
- Gemische aus Hexamethylendiamin und m-Xylylendiamin.

Bei den aliphatischen Polyamiden, deren Oligomeren oder Monomeren, die als Co-Komponenten dienen, handelt es sich bevorzugt um PA 46, PA 6, PA 66, PA 610, PA 11 oder PA 12, deren Oligomeren oder Lactam, insbesondere Caprolactam. Der totale Anteil dieser Co-Komponenten im Reaktionsgemisch beträgt bevorzugt 10 bis 90 Gewichts-Prozent, besonders bevorzugt 20 bis 85 Gewichts-Prozent. Es können auch Recycling-Polyamide (Mahlgüter, Regranulate, Agglomerate) verwendet werden.

Als neuer Rohstoff für die teilaromatischen Copolyamide kommen polymere, oligomere oder monomere Ester von aromatischen Dicarbonsäuren beliebigen Ursprungs in Frage. Bevorzugte Dicarbonsäureester sind Terephthalsäureester, Isophthalsäureester und 2,6-Naphthalin-Dicarbonsäurester. Diese können auch als Copolyester oder gar als entsprechende Polyesteramide verwendet werden.

Bevorzugte Polyestertypen sind Polyethylenterephthalat (PET), darauf basierende Copolyester (CoPET), Polybutylenterephthalat (PBT) und Polyethylennaphthalat (PEN).

Ökologisch sinnvoll und gleichwohl ökonomisch ist es, Polyesterabfälle bzw. daraus hergestellte Regranulate im erfindungsgemäßen Verfahren zu verwenden. Konkrete Polyesterqualitäten dieser Art sind zum Beispiel:
- Flaschenschnitzel oder -regranulat (PET oder zum Beispiel PETI-Copolyester)
- Faser- oder Folienagglomerate.

Ein Vorteil des erfindungsgemässen Verfahrens ist es, dass sogar Mischabfälle aus Polyester und Polyamid verwendet werden können, weil das in der Mischung enthaltene Polyamid gerade als Co-Komponente dienen kann. So ist also auch ein Faseragglomerat aus PET/PA ein geeigneter Rohstoff für das erfindungsgemässe Verfahren.

Zur Ermittlung der notwendigen Reaktionszeit für die annähernd vollständige Umamidierung der Estergruppen wurde das folgende, repräsentative Experiment durchgeführt:
In einem mit Stickstoff beschleierten Glaskolben wurde eine Mischung aus 115 g (25 Mol-% bzw. 36 Gew.-%) PET-Rezyklat und 136 g (50 Mol-% bzw. 42 Gew.-%) PA 6 aufgeschmolzen (bis auf 230 °C). In die gerührte Schmelze wurden dann unter Rückflusskühlung innerhalb von 1,5 Minuten 70 g (25 Mol-% bzw. 22 Gew.-%) Hexamethylendiamin (HMDA) zugegeben. Während des Versuchs wurden kleine Proben (je maximal 1 g) aus der Reaktionsmasse entnommen, und zwar vor der HMDA-Zugabe sowie 1 Minute, 3 Minuten, 5 Minuten usw. nach Ende der HMDA-Zu-gabe. Die Proben wurden mittels IR-Spektroskopie untersucht. Schon in der Probe 1 Minute nach Ende der HMDA-Zugabe zeigte sich ein starker Rückgang der Esterbindungen, wobei aber immer noch freies HMDA vorhanden war. In der Probe 3 Minuten nach Ende der HMDA-Zugabe waren aber bereits keine Esterbindungen mehr zu erkennen, und gleichzeitig war kein HMDA mehr nachweisbar. Somit war der Nachweis erbracht, dass bei 230 °C die Umsetzung zwischen Polyester und HMDA bereits nach 3 Minuten praktisch beendet ist. Diese kurze Reaktionszeit eröffnet natürlich die Möglichkeit, diesen Verfahrensschritt in kontinuierlichen Maschinen mit hoher Kapazität durchzuführen.

In einer bevorzugten erfindungsgemäßen Ausführungsform können die Verfahrensschritte Ester-Amidierung, Entfernung des abgespaltenen Alkohols bzw. Diols und Nachkondensation der entstandenen, niedermolekularen Copolyamid-Vorkondensate auf verschiedene Arten und auch getrennt voneinander durchgeführt werden:
Die Ester-Amidierung erfolgt in schmelzeflüssiger Phase und kann sowohl batchweise als auch kontinuierlich durchgeführt werden, und zwar bevorzugt im Temperaturbereich von 220 bis 300 °C. Alkohol- bzw. Diol-Entfernung und Nachkondensation sind in der Schmelze oder im festen Zustand möglich, und zwar jeweils auch batchweise oder kontinuierlich.

Eine bevorzugte Variante des erfindungsgemässen Verfahrens besteht darin, das Vorkondensat (Amidierung) in einer separaten Anlagenstufe herzustellen, anschliessend aber die Verfahrensschritte Alkohol- bzw. Diol-Entfernung und Nachkondensation gleichzeitig in Schmelzephase in einem Zwei- oder Mehrwellen-Entgasungsextruder durchzuführen.

Eine weitere vorteilhafte und ökonomische Variante der Erfindung ist dadurch charakterisiert, dass alle Verfahrensschritte in einer gekoppelten Extruderkombination kontinuierlich und in Schmelzephase durchgeführt werden, bestehend aus einem ersten Extruder mit Aufschmelz- und Mischzone, Druckdosierung zur Zugabe von geschmolzenem Diamin und Reaktionszone sowie einem direkt nachgeschalteten Zwei- oder Mehrwellen-Entgasungsextruder für die Verfahrensschritte Alkohol- bzw. Diol-Entfernung und Schmelze-Nachkondensation. Für den ersten Extruder sind zum Beispiel Zweiwellenextruder (vom Typ ZE/A von Berstorff) geeignet, die eine Länge von mehr als 20 D (z.B. 33 D) und ein Verhältnis von Schneckenaussen- zu -innendurchmesser (Dₐ/Dᵢ) von grösser als 1,4 aufweisen. Das umamidierte Gemisch wird nach dem ersten Extruder, mit oder ohne dazwischengeschaltete Zahnradpumpe, einem Entgasungsextruder zugeführt, bei dem es sich zum Beispiel um einen Zweiwellenextruder (vom Typ ZE/R; grossvolumiger Reaktionsextruder) oder um einen Mehrschneckenextruder bzw. -reaktor (vom Typ MSE/R von Berstorff) handeln kann. Entsprechend der Aufgabe des Entgasungsextruders, nämlich Vorentgasen/Flashen in der ersten Zone zur Entfernung grosser Mengen Alkohol bzw. Diol und Restentgasung bzw. Schmelzenachkondensation in der zweiten Zone, wird der Entgasungsextruder mit Vorteil zweistufig ausgelegt (mit entsprechenden Vorkehrungen zur vakuummässigen Trennung), d.h. mit einem Vorvakuum in der ersten Stufe und einem Vakuum von weniger als 10 mbar abs. in der zweiten Stufe, wobei hier die Temperatur vorzugsweise maximal 330 °C beträgt. Es ist vorteilhaft, am Ende der Vorvakuumstufe dem Reaktionsgemisch noch einmal Kettenregler, zum Beispiel Benzoesäure, zuzufügen.

In einem Extruder-Vorversuch hatte sich gezeigt, dass das Diamin in der für die Stöchiometrie notwendigen Menge nicht zusammen mit der Granulatmischung in den Einzug des ersten Extruders gegeben werden kann, weil sonst in der Einzugszone flüssiges HMDA abgeschieden und nicht miteingezogen wird. Das HMDA muss deshalb in geschmolzener Form über eine Flüssigdosierung in die Polymerschmelze (d.h. in eine entsprechende Extruderzone nach der Aufschmelzzone) appliziert werden.

Bei einer besonders bevorzugten Variante ist in einer erweiterten Extruderkombination direkt an den Entgasungsextruder ein weiterer Extruder zwecks Weiterverarbeitung angeschlossen, in welchem das teilaromatische Copolyamid mit den bekannten Zusatzstoffen (Schlagzähmodifikatoren, Verstärkungsmittel, Stabilisatoren, Farbstoffe, Pigmente, etc.) compoundiert wird, um anwendungsfertige Formmassen zu erhalten. In granulierter und getrockneter Form können diese nachher für Polyamid-Anwendungen in Bereichen wie Spritzguss, Extrusion und Blasformen eingesetzt werden.

Die nachfolgenden Beispiele dienen zur Erläuterung der Erfindung.

### Beispiel 1

In einem 6 Liter-Glaskolben wurde eine Mischung aus PET (Flaschenrezyklat) und PA 6 im Molverhältnis 1:2 (bzw. Gewichtsverhältnis 1:1,18) zusammen mit Benzoesäure (als Kettenregler, 12 g pro kg Polymermischung) und Dinatrium-Phosphat(lll) (als Antioxidans, 1,2 g pro kg Polymermischung) unter Inertgas aufgeschmolzen. In die Schmelze wurde bei ca. 230 °C unter Rühren und Rückkondensation verdampfender Anteile Hexamethylendiamin eingetragen im Molverhältnis 1:1 (bzw. Gewichtsverhältnis 1:0,60) bezogen auf PET (d.h. genau die stöchiometrisch notwendige Menge für vollständige Umsetzung). Etwa 5 Minuten nach Ende der HMDA-Zugabe wurde das entstandene Vorkondensat ausgetragen und nach der Abkühlung und Erstarrung zerkleinert. In einem Vakuumtrockenschrank wurde anschliessend 4 Stunden lang bei 180 °C und einem Vakuum von unter 10 mbar abs. das bei der Umamidierung freigewordene Ethylenglykol entfernt. Nach dieser Behandlungsstufe hatte das Material einen Schmelzpunkt (Peak) von ca. 260 °C und eine relative Viskosität von 1,2 (gemessen 1%ig [1g/dl] in Ameisensäure). Schliesslich wurde das Material in fester Phase unter Inertgas bei 210 °C eine Stunde lang nachkondensiert, wodurch sich die relative Viskosität auf 2,4 erhöhte. Dieses teilaromatische Copolyamid hatte einen Schmelzpunkt von ca. 255 °C und einen Glasübergangspunkt von ca. 83 °C.

### Beispiel 2

Eine Mischung aus PET (Flaschenrezyklat) und PA 6 im Molverhältnis 1:1 (Gewichtsverhältnis 1:0,59) mit den in Beispiel 1 genannten Zusätzen wurde unter Inertgas in einem 6 Liter-Glaskolben aufgeschmolzen. Bei einer Schmelzetemperatur von 240 bis 260 °C wurde HMDA wie in Beispiel 1 zugegeben und das Reaktionsgemisch ca. 5 Minuten nach Ende der HMDA-Zugabe wiederum als Vorkondensat ausgetragen. Nach der wie in Beispiel 1 durchgeführten Entfernung des Ethylenglykols betrug der Schmelzpunkt ca. 260 °C und die relative Viskosität 1,3. Nach der gleich wie in Beispiel 1 durchgeführten Nachkondensation betrug die relative Viskosität 2,5 , der Schmelzpunkt ca. 265 °C und der Glasübergangspunkt ca. 88 °C.

### Beispiel 3

In einem 6 Liter-Glaskolben wurde in eine Mischung aus PET (Flaschenrezyklat) und PA 66 im Molverhältnis 1:1 (Gewichtsverhältnis 1:1 , 1 8) mit den in Beispiel 1 genannten Zusätzen unter Inertgas bei 280 bis 300 °C wie in den Beispielen 1 und 2 HMDA eingetragen. Etwa 5 Minuten nach Ende der HMDA-Zugabe wurde das entstandene Vorkondensat ausgetragen. Nach der wie in Beispiel 1 durchgeführten Entfernung des Ethylenglykols betrug der Schmelzpunkt ca. 260 °C und die relative Viskosität 1,2. Nach der wie in Beispiel 1 durchgeführten Nachkondensation betrug die Viskosität 2,3 , der Schmelzpunkt ca. 255 °C und der Glasübergangspunkt ca. 104 °C.

### Beispiel 4

In diesem Beispiel wurde die Amidierung in einem Extruder durchgeführt. Ausgegangen wurde von einem homogenen Co-Extrudat aus 75 Gew.-% PET (Flaschenrezyklat) und 25 Gew.-% PA 6 (entsprechend 64 Mol-% PET und 36 Mol% PA 6). Dieses Material wurde in einem Zweiwellenextruder (vom Typ Berstorff ZE 40A) bei 300 °C aufgeschmolzen. Nach der Aufschmelzzone wurden über eine Flüssigdosierung unter Druck 0,5 kg HMDA pro kg Schmelze in die Schmelze dosiert, entsprechend ca. 110 % der zur vollständigen Amidierung des Polyesters benötigten Menge. Der Durchsatz wurde unter Berücksichtigung von Extruderlänge und -volumen so gewählt, dass nach der Flüssigdosierung dem Reaktionsgemisch zur Umamidierung der Esterbindungen eine Verweilzeit von mindestens 3 Minuten blieb. Das entstandene Vorkondensat wurde in einem Wasserbad abgekühlt und dann zerkleinert (granulierfähig war es aufgrund der niedrigen Viskosität noch nicht), getrocknet und wie in den vorangegangenen Beispielen von restlichem Glykol befreit. IR-spektroskopisch waren in diesem Vorkondensat keine Esterbindungen mehr nachweisbar, d.h. die Amidierung war also vollständig abgelaufen. Der Schmelzpunkt des Vorkondensates betrug ca. 290 °C. Durch die wie in den vorangegangenen Beispielen durchgeführte Nachkondensation stieg der Schmelzpunkt sogar auf ungefähr 340 °C, entsprechend dem relativ niedrigen Anteil an aliphatischem Polyamid in der Ausgangsmischung.

### Beispiel 5

Ähnlich wie in Beispiel 4 wurde eine Mischung aus 25 Gew.-% PET (Flaschenrezyklat) und 75 Gew.-% PA 6 (entsprechend 16,5 Mol-% PET und 83,5 Mol-% PA 6) unter Zusatz von Gleitmittel und Antioxidans in einem Zweiwellenextruder aufgeschmolzen und über eine genügend lange Extruderstrecke homogenisiert. In die Schmelze wurden mit einer Flüssigdosierung unter Druck 0,165 kg HMDA pro kg Schmelze eingebracht, d.h. ca. 110 % der zur Amidierung des Polyesters theoretisch benötigten Menge. Der Durchsatz wurde analog zu Beispiel 4 so gewählt, dass nach der Flüssigdosierung dem Reaktionsgemisch eine Verweilzeit von mindestens 3 Minuten zur Umamidierung blieb. Das entstandene Vorkondensat war bereits granulierbar und gemäss IR-Spektrum frei von Estergruppen. Nach der Behandlung des Vorkondensates in fester Phase gleich wie in den obigen Beispielen hatte das Material nach der Glykolentfernung einen Schmelzpunkt von ca. 210 °C und eine relative Viskosität von 1,5. Am nachkondensierten Material wurde ein Schmelzpunkt von ca. 220 °C und eine relative Viskosität von 2,1 gemessen.

### Beispiel 6

Ein homogenes Co-Extrudat aus 45 Gew.-% reinem ("jungfräulichem") PET (pigmentfrei (ultrabright), Intrinsic Viskosität 0,78 dl/g) und 55 Gew.-% PA 66 wurde in einem Zweiwellenextruder, wie in Beispiel 4 beschrieben, aufgeschmolzen; die Temperatur der Aufschmelzzone betrug 290°C. Nach der Aufschmelzzone wurden pro kg Schmelze 0,3 kg geschmolzenes HMDA, das sind 110 % der zur Esteramidierung benötigten Menge, zudosiert. Der Durchsatz wurde unter Berücksichtigung von Extruderlänge und -volumen so gewählt, daß nach der HMDA-Zugabe die Verweilzeit mindestens noch 3 Minuten betrug. Ähnlich wie bei Beispiel 4 entstand ein noch nicht granulierbares Vorkondensat, das nach Zerkleinern und Trocknen wie in den vorausgegangenen Beispielen beschrieben unter weiterer Glykolabspaltung nachkondensiert wurde. Dabei stieg der Schmelzpunkt auf ca. 290°C an. In Beispiel 3 wurde - ausgehend von nahezu gleichem Verhältnis PET:PA 66 - ein deutlich niedriger schmelzendes Endprodukt erhalten. Das erklärt sich neben dem homogeneren Reaktionsverlauf im Extruder vor allem aus der Tatsache, daß im vorliegenden Beispiel 6 reines PET umgesetzt wurde, während das Flaschenrezyklat (Beispiel 4) Anteile an Polyethylenisophthalat enthielt.

## Patentansprüche

1. Verfahren zur Herstellung von teilaromatischen Copolyamiden, dadurch gekennzeichnet, dass man
(a) polymere Ester von aromatischen Dicarbonsäuren in Gegenwart von aliphatischen Polyamiden oder deren Oligomeren oder Monomeren mit mindestens einem Diamin unter intensivem Durchmischen und unter Inertgasatmosphäre bei Temperaturen von 220 bis 300°C unter nahezu vollständiger Amidierung der Estergruppen umsetzt, wobei man ein Verhältnis von Polyester-Grundmol-Einheit zu Mol Diamin, in reiner Form oder als Gemisch von Diaminen, von 1:1 bis 1:1,2 einstellt,
(b) die abgespaltenen Alkohole oder Diole entfernt und
(c) die niedermolekularen Vorkondensate in Anwesenheit von zugesetzten Kettenreglern und gegebenfalls weiteren Additiven zu teilaromatischen Copolyamiden bei Temperaturen von über 200°C nachkondensiert,
(d) gegebenenfalls die teilaromatischen Copolyamide durch Compoundierung mit an sich bekannten Zusatzstoffen zu anwendungsfertigen Polyamid-Formmassen weiterverarbeitet.

2. Verfahren nach Anspruch 1, dadurch gekennzeichnet, dass man das in Schritt (a) einzusetzende, Polyestermaterial enthaltende Ausgangsmaterial aufschmilzt, homogenisiert und gegebenenfalls filtriert.

3. Verfahren nach einem der Ansprüche 1 oder 2, dadurch gekennzeichnet, daß die Verfahrensschritte Ester-Amidierung, Alkohol- bzw. Diol-Entfernung und Nachkondensation getrennt durchgeführt werden, wobei die Ester-Amidierung in schmelzeflüssiger Phase und die anderen beiden Verfahrensschritte in schmelzeflüssiger oder fester Phase erfolgen.

4. Verfahren nach einem der Ansprüche 1 bis 3, dadurch gekennzeichnet, das die Ester-Amidierung in einem Rührreaktor mit Rückflusskühler unter Inertgas durch Zugabe von geschmolzenem Diamin zu einer Schmelze der übrigen Komponenten bei Temperaturen zwischen 220 und 300°C erfolgt und anschliessend die Verfahrensschritte Alkohol- bzw. Diol-Entfernung und Nachkondensation gleichzeitig in einem Zwei- oder Mehrwellen-Entgasungsextruder durchgeführt werden.

5. Verfahren nach einem der Ansprüche 1 bis 4, dadurch gekennzeichnet, dass alle Verfahrensschritte kontinuierlich und in Schmelzephase in einer Extruderkombination durchgeführt werden, bestehend aus einem ersten Extruder mit Aufschmelz- und Mischzone, Druckdosierung zur Zugabe von geschmolzenem Diamin und Reaktionszone, sowie einem Zwei- oder Mehrwellen-Entgasungsextruder für die Verfahrensschritte Alkohol- bzw- Diol-Entfernung und Schmelze-Nachkondensation.

6. Verfahren nach Anspruch 4 oder 5, dadurch gekennzeichnet, dass der Entgasungsextruder zweistufig ausgelegt ist und in einer Vorvakuumzone zunächst eine Vorentgasung zur Entfernung grosser Mengen Alkohol bzw. Diol erfolgt, und in einer zweiten Zone, gegebenenfalls nach Zufügen von weiterem Kettenregler zum Reaktionsgemisch, bei einem Vakuum von weniger als 10 mbar abs. und einer Temperatur von maximal 330°C eine Restentgasung und die Schmelzenachkondensation statfindet.

7. Verfahren nach einem der Ansprüche 4 bis 6, dadurch gekennzeichnet, dass sich zur Compoundierung des teilaromatischen Copolyamids ein weiterer Extruder direkt an den Entgasungsextruder anschliesst.

8. Verfahren nach einem der vorhergehenden Ansprüche 1 bis 7, dadurch gekennzeichnet, dass man als polymere Ester aromatischer Dicarbonsäuren (Co)Polyterephthalsäureester, (Co)Polyisophthalsäureester, (Co)Poly-2,6-naphtalin-Dicarbonsäureester oder entsprechende Polyesteramide verwendet, wobei diese Materialien gegebenenfalls abbaubedingt noch Oligomere oder Monomere enthalten können.

9. Verfahren nach Anspruch 8, dadurch gekennzeichnet, dass als polymere Ester Polyethylenterephthalat oder darauf basierende Copolyester oder Polybutylenterephthalat eingesetzt werden.

10. Verfahren nach Anspruch 8, dadurch gekennzeichnet, dass als polymere Ester entweder auspolymerisierter Polyesterrohstoff oder Recycling-Polyester eingesetzt werden, insbesondere Flaschenrezyklat, Faser- oder Folienagglomerate, oder auch Agglomerate aus PET/PA-Mischfasern.

11. Verfahren nach einem der vorhergehenden Ansprüche 1 bis 10, dadurch gekennzeichnet, dass zur Ester-Amidierung mindestens ein Diamin der Formel H₂N-R¹-NH₂ eingesetzt wird, wobei R¹
- einen zweiwertigen aromatischen Rest mit 6 bis 14 C-Atomen, oder
- einen zweiwertigen alicyclischen Rest mit 6 C-Atomen, oder
- einen zweiwertigen Rest der Formel CH₂-R²-CH_{2,} wobei R²
einen zweiwertigen aliphatischen Rest mit 2 bis 20 C-Atomen, oder
einen zweiwertigen alicyclischen Rest mit 6 bis 20 C-Atomen, oder
einen zweiwertigen aromatischen Rest mit 6 bis 16 C-Atomen darstellt.

12. Verfahren nach Anspruch 11, dadurch gekennzeichnet, das die Diamine aus der Gruppe Hexamethylendiamin, m-Xylylendiamin, 1,4-Bis(aminomethyl)cyclohexan oder Gemischen aus Hexamethylendiamin und m-Xylylendiamin ausgewählt werden.

13. Verfahren nach einem der vorhergehenden Ansprüche 1 bis 12, dadurch gekennzeichnet, dass der Anteil an aliphatischen Polyamiden im Reaktionsgemisch 10 bis 90 Gewichts-%, bevorzugt 20 bis 85 Gewichts-% beträgt.

14. Verfahren nach Anspruch 13, dadurch gekennzeichnet, dass als aliphatische Polyamide PA 46, PA 6, PA 610, PA 66, PA 11 oder PA 12 verwendet werden.

15. Verfahren nach Anspruch 13, dadurch gekennzeichnet, dass als aliphatische Polyamide Recycling-Polyamide verwendet werden, insbesondere Mahlgüter, Regranulate und Agglomerate.

16. Verfahren nach Anspruch 13, dadurch gekennzeichnet, dass die aliphatischen Polyamide teilweise oder ganz durch Caprolactam ersetzt werden.

17. Verwendung von teilaromatischen Copolyamiden bzw. Polyamid-Formmassen, hergestellt gemäß einem oder mehreren der Ansprüche 1 bis 16, für Anwendungen in den Bereichen Spritzguß, Extrusion und Blasformen.

## Claims

1. Method of producing partly aromatic copolyamides, characterised in that
(a) polymeric esters of aromatic dicarboxylic acids are converted in the presence of aliphatic polyamides or their oligomers or monomers with at least one diamine by intensive mixing and in an inert gas atmosphere at temperatures of 220 to 300°C with virtually complete amidation of the ester groups, thereby producing a ratio of polyester-and-base mol unit to mol diamine of between 1:1 and 1:1.2, in pure form or as a mixture of diamines,
(b) the separated alcohols or diols are removed, and
(c) the lower-molecular preliminary condensates are subsequently condensed in the presence of added chain regulators and possibly additional additives to form partly aromatic copolyamides at temperatures of more than 200°C,
(d)the partly aromatic copolyamides are possibly processed further to form ready-to-use polyamide moulding compositions by compounding them with additives known per se.

2. Method according to claim 1, characterised in that the basic material to be used in step (a) and containing polyester material is melted, homogenised and possibly filtered.

3. Method according to one of claims 1 or 2, characterised in that the method steps of ester amidation, alcohol or diol removal and subsequent condensation are carried out separately, the ester amidation being effected in the molten phase, and the other two method steps being effected in the molten or solid phase.

4. Method according to one of claims 1 to 3, characterised in that the ester amidation is effected in an agitation reactor with a reflux cooler in inert gas by adding molten diamine to form a molten mass of the remaining components at temperatures between 220 and 300°C, and subsequently the method steps of alcohol or diol removal and subsequent condensation are carried out simultaneously in a degasifying extruder having two or more shafts.

5. Method according to one of claims 1 to 4, characterised in that all of the method steps are carried out continuously and in the molten phase in an extruder combination, which comprises a first extruder with a melting and mixing zone, a pressurised metering means for the addition of molten diamine and a reaction zone, as well as a degasifying extruder having two or more shafts for the method steps of alcohol or diol removal and subsequent condensation of the molten mass.

6. Method according to claim 4 or 5, characterised in that the degasifying extruder has two steps and, in a fore-vacuum zone, a preliminary degasification is initially effected to remove large quantities of alcohol or diol and, in a second zone, possibly after the addition of an additional chain regulator to the reaction mixture, a residual degasification and the subsequent condensation of the molten mass are effected at a vacuum of less than 10 mbar abs. and a maximum temperature of 330°C.

7. Method according to one of claims 4 to 6, characterised in that an additional extruder communicates directly with the degasifying extruder for compounding the partly aromatic copolyamide.

8. Method according to one of the preceding claims 1 to 7, characterised in that (co)polyterephthalic acid esters, (co)polyisophthalic acid esters, (co)poly-2,6-naphthaline dicarboxylic acid esters or corresponding polyesteramides are used as the polymeric esters of aromatic dicarboxylic acids, these materials still being able to contain oligomers or monomers, possibly subject to decomposition.

9. Method according to claim 8, characterised in that polyethylene terephthalate or copolyesters based thereon or polybutylene terephthalate are used as the polymeric esters.

10. Method according to claim 8, characterised in that either polymerised polyester raw material or recycling polyesters is or are used as the polymeric esters, more especially recycled bottle material, fibre or film agglomerates or even agglomerates formed from PET/PA mixed fibres.

11. Method according to one of the preceding claims 1 to 10, characterised in that at least one diamine of the formula H₂N-R¹-NH₂ is used for the ester amidation, in which R¹ represents
- a bivalent aromatic residue having 6 to 14 C atoms, or
- a bivalent alicyclic residue having 6 C atoms, or
- a bivalent residue of the formula CH₂-R²-CH₂, in which R² represents
a bivalent aliphatic residue having 2 to 20 C atoms, or
a bivalent alicyclic residue having 6 to 20 C atoms, or
a bivalent aromatic residue having 6 to 16 C atoms.

12. Method according to claim 11, characterised in that the diamines are selected from the group including hexamethylene diamine, m-xylylene diamine, 1,4-bis(aminomethyl)cyclohexane or mixtures formed from hexamethylene diamine and m-xylylene diamine.

13. Method according to one of the preceding claims 1 to 12, characterised in that the proportion of aliphatic polyamides in the reaction mixture is between 10 and 90 % by weight, preferably between 20 and 85 % by weight.

14. Method according to claim 13, characterised in that PA 46, PA 6, PA 610, PA 66, PA 11 or PA 12 are used as the aliphatic polyamides.

15. Method according to claim 13, characterised in that recycling polyamides, more especially ground materials, regranulates and agglomerates, are used as the aliphatic polyamides.

16. Method according to claim 13, characterised in that the aliphatic polyamides are partially or wholly replaced by caprolactam.

17. Use of partly aromatic copolyamides or polyamide moulding compositions, produced according to one or more of claims 1 to 16, for applications in the fields of injection moulding, extrusion and blow-moulding.

## Revendications

1. Procédé de fabrication de copolyamides partiellement aromatiques, caractérisé en ce que l'on
(a) fait réagir des esters polymères d'acides dicarboxyliques aromatiques en présence de polyamides aliphatiques ou de leurs oligomères ou monomères avec au moins une diamine par mélange intense et sous atmosphère de gaz inerte à des températures de 220 à 300 °C par amidification quasi totale de leurs groupes esters, un rapport de 1:1 à 1:1,2 étant réglé à cet effet sous une forme pure ou en tant que mélange de diamines entre une mole de base d'unité de polyester et une mole de diamine,
(b) élimine les alcools ou les diols clivés, et
(c) post-condense les précondensats de faible poids moléculaire en présence de régulateurs de chaîne ajoutés, et le cas échéant d'autres additifs, en copolyamides partiellement aromatiques à des températures supérieures à 200 °C,
(d) transforme le cas échéant les copolyamides partiellement aromatiques en masses polyamides pouvant être mises en forme prêtes à l'emploi par compounding avec des additifs en soi connus.

2. Procédé selon la revendication 1, caractérisé en ce que l'on fond, homogénéise et filtre le cas échéant la matière de départ contenant de la matière polyester à utiliser dans la phase (a).

3. Procédé selon l'une des revendications 1 ou 2, caractérisé en ce que les phases de procédé d'amidification d'esters, d'élimination d'alcools ou de diols et de post-condensation sont effectuées séparément, l'amidification d'esters étant effectuée en phase de fusion liquide, et les deux autres phases de procédé en phase de fusion liquide ou solide.

4. Procédé selon l'une des revendications 1 à 3, caractérisé en ce que l'amidification d'esters est effectuée sous gaz inerte dans un réacteur agitateur à refroidisseur de reflux par l'ajout de diamine fondue à une masse fondue des autres composés à des températures comprises entre 220 et 300 °C, et en ce que les phases de procédé d'élimination d'alcools ou de diols et de post-condensation sont effectuées ensuite simultanément dans une extrudeuse de dégazage à deux ou plusieurs arbres.

5. Procédé selon l'une des revendications 1 à 4, caractérisé en ce que toutes les phases de procédé sont effectuées en continu et en phase de fusion dans une combinaison d'extrudeuses, constituée d'une première extrudeuse comportant une zone de fusion et de mélange, un dosage sous pression destiné à l'ajout de diamine fondue, et une zone de réaction, ainsi que d'une extrudeuse de dégazage à deux ou plusieurs arbres pour les phases de procédé d'élimination d'alcools ou de diols et de post-condensation de la masse fondue.

6. Procédé selon la revendication 4 ou 5, caractérisé en ce que l'extrudeuse de dégazage est réalisée en deux étages, qu'un dégazage destiné à l'élimination de grandes quantités d'alcools ou de diols a dans un premier temps lieu dans une zone de vide préliminaire, et qu'un dégazage résiduel et la post-condensation de la masse fondue ont lieu dans une deuxième zone sous un vide de moins de 10 mbars et à une température maximale de 330 °C, le cas échéant après l'ajout d'autres régulateurs de chaîne au mélange réactionnel.

7. Procédé selon l'une des revendications 4 à 6, caractérisé en ce qu'une autre extrudeuse est raccordée directement à l'extrudeuse de dégazage pour le compounding des copolyamides partiellement aromatiques,

8. Procédé selon l'une des revendications 1 à 7, caractérisé en ce l'on utilise en tant qu'esters polymères des acides dicarboxyliques aromatiques d'ester d'acide de (co)polytéréphtalate, d'ester d'acide de (co)polyisophtalate, d'ester d'acide dicarboxylique de (co)poly-2,6-naphtaline ou des amides polyesters correspondants, ces matières pouvant le cas échéant encore contenir des oligomères ou des monomères qui sont conditionnés par la décomposition.

9. Procédé selon la revendication 8, caractérisé en ce que l'on utilise en tant qu'esters polymères du polyéthylènetéréphtalate ou des copolyesters à base de polyéthylènetéréphtalate ou du polybutylènetéréphtalate.

10. Procédé selon la revendication 8, caractérisé en ce que l'on utilise en tant qu'esters polymères, soit de la matière première de polyester polymérisé, soit du polyester recyclé, notamment des bouteilles recyclées, des agglomérats de fibres ou de films, ou également des agglomérats de fibres mixtes de PET/PA.

11. Procédé selon l'une quelconque des revendications précédentes 1 à 10, caractérisé en ce que l'on utilise pour l'amidification d'esters au moins une diamine de la formule
H₂N-R¹-NH₂, R¹ étant
- un radical aromatique bivalent avec 6 à 14 atomes C, ou
- un radical alicyclique bivalent avec 6 atomes C, ou
- un radical bivalent de la formule CH₂-R²-CH₂, R² étant
un radical aliphatique bivalent avec 2 à 20 atomes C, ou
un radical alicyclique bivalent avec 6 à 20 atomes C, ou
un radical aromatique bivalent avec 6 à 16 atomes C.

12. Procédé selon la revendication 11, caractérisé en ce que les diamines sont choisies dans le groupe hexamétylènediamine, m-xylylènediamine, 1,4-bis(aminométhyle)cyclohexane, ou de mélanges d'hexamétylènediamine et de m-xylylènediamine.

13. Procédé selon l'une quelconque des revendications précédentes 1 à 12, caractérisé en ce que la proportion de polyamides aliphatiques dans le mélange réactionnel est de 10 à 90 % en poids, de préférence de 20 à 85 % en poids.

14. Procédé selon la revendication 13, caractérisé en ce que du PA 46, du PA 6, du PA 610, du PA 66, du PA 11 ou du PA 12 sont utilisés en tant que polyamides aliphatiques.

15. Procédé selon la revendication 13, caractérisé en ce que des polyamides recyclés sont utilisés en tant que polyamides aliphatiques, notamment des matières moulues, des regranulats et des agglomérats.

16. Procédé selon la revendication 13, caractérisé en ce que les polyamides aliphatiques sont remplacés partiellement ou entièrement par du caprolactame.

17. Utilisation de copolyamides partiellement aromatiques ou de masses polyamides pouvant être mises en formes fabriquées selon l'une quelconque ou plusieurs des revendications 1 à 16 pour des applications dans les domaines du moulage par injection, de l'extrusion et de moules de soufflage.
